# EUROPEAN PATENT APPLICATION

(11) **EP 4 811 674 A1**
(43) Date of publication of application: **23.09.2026**
(21) Application number: 24890663.8
(22) Date of filing: 12.11.2024
(51) Int. Cl.: H04B 7/06

(54) **COMMUNICATION METHOD AND APPARATUS**

(30) Priority: 15.11.2023 CN 202311527277
(71) Applicant: Shanghai Satellite Network Research Institute Co., Ltd., Shanghai 201204 (CN)
(72) Inventor: SUN, Jianfeng, Shanghai 201204 (CN); XU, Xiaofan, Shanghai 201204 (CN); HOU, Peipei, Shanghai 201204 (CN)
(74) Representative: Santarelli
(86) International application number: PCT/CN2024/131577
(87) International publication number: WO 2025/103308

(57) **Abstract**

Provided in the present disclosure are communication methods and apparatus. A method comprises: in response to a first signal sent by a second satellite, acquiring a first initial point ahead angle of a first satellite with respect to the second satellite and, according to the first initial point ahead angle, sending a second signal to the second satellite; according to the angle of a light beam main lobe in the second signal at a first full width at half maximum and the first initial point ahead angle, determining a first target point ahead angle; according to the first target point ahead angle, sending a third signal to the second satellite; and, in response to a fourth signal sent by the second satellite, sending to the second satellite a fifth signal carrying first communication data, the fifth signal being used for sending of a sixth signal. Thus, the present disclosure achieves point ahead orientation for a satellite having a coaxial structure of a transmitting optical axis and a receiving optical axis, corrects the first initial point ahead angle, and accurately controls the point ahead, thereby improving the applicability of the method.

## Description

### CROSS-REFERENCE TO RELATED APPLICATIONS

The present application claims the priority to the Chinese patent application No. 202311527277.5, entitled "COMMUNICATION METHOD AND APPARATUS", filed with the Intellectual Property Office of the people's republic of China on November 15, 2023, the entirety of which is incorporated herein by reference.

### TECHNICAL FIELD

The present disclosure relates to the technical field of satellite communications, and in particular, to a communication method and apparatus.

### BACKGROUND

In satellite communications, due to relative motion between satellites, an instantaneous point ahead angle needs to be calculated in advance for a transmitting satellite, and an angle by which an emergent beacon beam offsets from an incident beacon beam in advance is taken as the point ahead angle, so that the transmitted beacon beam can accurately reach a receiving satellite.

In related arts, the transmitting optical axis and the receiving optical axis on the satellite are independent from each other, and respective point ahead angles are calculated to perform point ahead control. However, it is inapplicable to those satellites having an antenna in which the transmitting optical axis and the receiving optical axis are in a coaxial structure.

### SUMMARY

The present disclosure provides a communication method and apparatus, for accurately controlling point ahead of a satellite with a coaxial structure.

In a first aspect, an embodiment of the present disclosure provides a communication method, applied to a first satellite, comprising: acquiring a first initial point ahead angle of the first satellite relative to a second satellite, in response to a first signal transmitted by the second satellite, and transmitting a second signal to the second satellite according to the first initial point ahead angle, wherein the first signal and the second signal comprise a plurality of partially coherent beam signals; determining a first target point ahead angle according to a first angle at full width at half maximum of a main lobe of a light beam in the second signal and the first initial point ahead angle; transmitting a third signal to the second satellite according to the first target point ahead angle, such that the second satellite transmits a fourth signal based on the third signal, wherein the third signal and the fourth signal comprise coherent beam signals; and transmitting a fifth signal carrying first communication data to the second satellite in response to the fourth signal transmitted by the second satellite, wherein the fifth signal is configured for the second satellite to transmit a sixth signal carrying second communication data, and the fifth signal and the sixth signal comprise coherent beam signals.

The above solution, by calculating the first initial point ahead angle of the first satellite relative to the second satellite based on the received first signal transmitted by the second satellite, and transmitting the second signal to the second satellite according to the first initial point ahead angle, achieves point ahead pointing of the satellites having antennas in which the transmitting optical axis and the receiving optical axis are in a coaxial structure. By determining the first target point ahead angle according to the first angle at full width at half maximum of the main lobe of the light beam in the second signal and the first initial point ahead angle, correction of the first initial point ahead angle is achieved. By transmitting the third signal to the second satellite according to the corrected first target point ahead angle, so that the second satellite accurately receives the third signal, precisely control of the point ahead of the satellite with the coaxial structure is achieved. Further, by the first satellite transmitting the fifth signal carrying the first communication data to the second satellite in case of receiving the fourth signal transmitted by the second satellite, and the second satellite transmitting the sixth signal carrying the second communication data to the first satellite in case of the second satellite receiving the fifth signal, satellite communications is achieved on the basis of accurately completing communication link establishment between the first satellite and the second satellite, which have antennas in which the transmitting optical axis and the receiving optical axis are in the coaxial structure, thereby improving the applicability of the method.

In a second aspect, an embodiment of the present disclosure provides a communication method, applied to a second satellite, comprising: transmitting a first signal to a first satellite, such that the first satellite acquires a first initial point ahead angle relative to the second satellite based on the first signal and transmits a second signal to the second satellite according to the first initial point ahead angle, wherein the first signal comprises a plurality of partially coherent beam signals; receiving the second signal transmitted by the first satellite, wherein the second signal comprises a plurality of partially coherent beam signals; transmitting a fourth signal to the first satellite in response to a third signal transmitted by the first satellite according to a first target point ahead angle, wherein the first target point ahead angle is determined by the first satellite according to a first angle at full width at half maximum of a main lobe of a light beam in the second signal and the first initial point ahead angle, and the third signal and the fourth signal comprise coherent beam signals; and transmitting a sixth signal carrying second communication data to the first satellite in response to a fifth signal carrying first communication data transmitted by the first satellite, wherein the fifth signal is transmitted by the first satellite in response to the fourth signal, and the fifth signal and the sixth signal comprise coherent beam signals.

In a third aspect, an embodiment of the present disclosure provides a communication apparatus, applied to a first satellite, comprising: a processing module configured to, acquire a first initial point ahead angle of the first satellite relative to a second satellite, in response to a first signal transmitted by the second satellite, and transmit a second signal to the second satellite according to the first initial point ahead angle, wherein the first signal and the second signal comprise a plurality of partially coherent beam signals; a first determining module configured to, determine a first target point ahead angle according to a first angle at full width at half maximum of a main lobe of a light beam in the second signal and the first initial point ahead angle; a first transmitting module configured to, transmit a third signal to the second satellite according to the first target point ahead angle, such that the second satellite transmits a fourth signal based on the third signal, wherein the third signal and the fourth signal comprise coherent beam signals; and a second transmitting module configured to, transmit a fifth signal carrying first communication data to the second satellite in response to the fourth signal transmitted by the second satellite, wherein the fifth signal is configured for the second satellite to transmit a sixth signal carrying second communication data, and the fifth signal and the sixth signal comprise coherent beam signals.

In a fourth aspect, an embodiment of the present disclosure provides a communication apparatus, applied to a second satellite, comprising: an acquiring module configured to, transmit a first signal to a first satellite, such that the first satellite acquires a first initial point ahead angle relative to the second satellite based on the first signal and transmits a second signal to the second satellite according to the first initial point ahead angle, wherein the first signal comprises a plurality of partially coherent beam signals; a first determining module configured to, receive the second signal transmitted by the first satellite, wherein the second signal comprises a plurality of partially coherent beam signals; a transmitting module configured to, transmit a fourth signal to the first satellite in response to a third signal transmitted by the first satellite according to a first target point ahead angle, wherein the first target point ahead angle is transmitted by the first satellite according to the first target point ahead angle, and the first target point ahead angle is determined from a first angle at full width at half maximum of a main lobe of a light beam in the second signal and the first initial point ahead angle, and the third signal and the fourth signal comprise coherent beam signals; and a receiving module configured to, transmit a sixth signal carrying second communication data to the first satellite in response to a fifth signal carrying first communication data transmitted by the first satellite, wherein the fifth signal is transmitted by the first satellite in response to the fourth signal, and the fifth signal and the sixth signal comprise coherent beam signals.

In a fifth aspect, an embodiment of the present disclosure provides an electronic device, comprising a memory, a processor, and a computer program stored in the memory and being executable on the processor, the processor, when executing the computer program, implementing the communication method according to the embodiments in the first aspect of the present disclosure, or implementing the communication method according to the embodiments in the second aspect of the present disclosure.

In a sixth aspect, an embodiment of the present disclosure provides a computer-readable storage medium having stored thereon a computer program, which when executed by a processor, implements the communication method according to the embodiments in the first aspect of the present disclosure, or implements the communication method according to the embodiments in the second aspect of the present disclosure.

In a seventh aspect, an embodiment of the present disclosure provides a computer program product, which when executed by an instruction processor in the computer program product, implements the communication method according to the embodiments in the first aspect of the present disclosure, or implements the communication method according to the embodiments in the second aspect of the present disclosure.

Additional aspects and advantages of the present disclosure will be set forth in part in the following description and, in part, will be obvious from the following description, or may be learned by practice of the present disclosure.

### BRIEF DESCRIPTION OF THE DRAWINGS

In order to more clearly illustrate the technical solutions in the embodiments of the present application, the drawings required to be used in the description of the embodiments will be briefly introduced below, and it is apparent that the drawings in the description below are only some embodiments of the present application, and it is obvious for those skilled in the art that other drawings may be obtained from these drawings without creative efforts.
FIG. 1 is an interaction flow diagram of a first communication method provided by an embodiment of the present disclosure;
FIG. 2 is a schematic diagram of a first initial point ahead angle provided by an embodiment of the present disclosure;
FIG. 3 is an interaction flow diagram of a second communication method provided by an embodiment of the present disclosure;
FIG. 4 is an interaction flow diagram of a third communication method provided by an embodiment of the present disclosure;
FIG. 5 is a schematic diagram of a vector phased array antenna provided by an embodiment of the present disclosure;
FIG. 6 is a schematic diagram of transmitting a beam at a point ahead angle, provided by an embodiment of the present disclosure;
FIG. 7 is an interaction flow diagram of a fourth communication method provided by an embodiment of the present disclosure;
FIG. 8 is a flow diagram of the first communication method provided by an embodiment of the present disclosure;
FIG. 9 is a flow diagram of the second communication method provided by an embodiment of the present disclosure;
FIG. 10 is a schematic structural diagram of a communication apparatus provided by an embodiment of the present disclosure;
FIG. 11 is a schematic structural diagram of another communication apparatus provided by an embodiment of the present disclosure;
FIG. 12 is a block diagram of an electronic device for communication shown by an exemplary embodiment.

### DETAILED DESCRIPTION

Reference will now be made in detail to the embodiments of the present disclosure, examples of which are illustrated in the accompanying drawings, where same or like reference numerals refer to same or similar elements or elements having same or similar functions throughout. The embodiments described below with reference to the accompanying drawings are illustrative and intended to explain the present disclosure, and should not be construed as limiting the present disclosure.

Due to relative motion between satellites, laser communication terminals on the satellites need to consider a point ahead angle in the process of signal acquiring and tracking. The existence of the angle enables the transmitting and receiving optical axes to have slight real-time changes, and the angle is generally realized by a point ahead mechanism. An angle difference caused by on-orbit operation of the space satellite and transmission delay of the light beam is compensated by the fine adjustment of the point ahead mechanism, and then is transmitted out by an optical antenna in a reverse optical path direction of the incident light.

In related arts, the point ahead system calculates an instantaneous point ahead angle in advance according to an ephemeris and a speed of relative motion between satellite-ground terminals, and takes an angle by which emergent beacon beam offsets from incident beacon beam in advance as the magnitude of point ahead angle, so that the transmitted beacon beam can accurately reach the opposite terminal. The point ahead detector firstly detects an angle difference between the optical axis of the emergent beacon beam and the optical axis of the incident beacon beam, and sends it to the point ahead controller, and then controls the point ahead mechanism to deflect until the angle by which the optical axis of the transmitted light offsets from the optical axis of the received beacon beam reaches a required point ahead angle, completing the point ahead process. A high-power beacon laser is required for using the beacon beam to assist in performing operations such as signal acquisition, tracking, pointing, increasing the weight of the payload and the complexity of the structure.

Meanwhile, the transmitting optical axis and the receiving optical axis on the satellite are independent from each other, and respective point ahead angles are calculated separately to perform point ahead control. However, it is inapplicable to those satellites having a phased array antenna with a coaxial structure.

Therefore, in order to solve the above problem, the present disclosure provides a communication method and apparatus.

The communication method and apparatus of the embodiments of the present disclosure are described below with reference to the drawings.

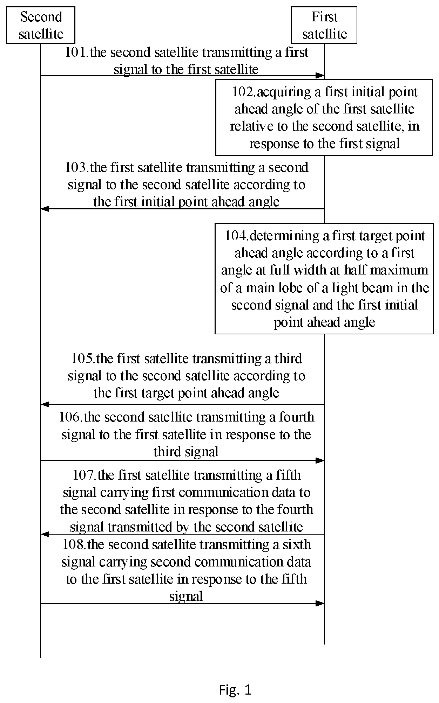

FIG. 1 is an interaction flow diagram of a communication method provided by an embodiment of the present disclosure. As shown in FIG. 1, the communication method may comprise the steps of: Step 101, a second satellite transmitting a first signal to a first satellite; Step 102, the first satellite acquiring a first initial point ahead angle of the first satellite relative to the second satellite, in response to the first signal; and Step 103, the first satellite transmitting a second signal to the second satellite according to the first initial point ahead angle, wherein the first signal and the second signal comprise a plurality of partially coherent beam signals.

To achieve point ahead pointing of the satellite, as an example, the first initial point ahead angle of the first satellite relative to the second satellite may be acquired in response to the first signal transmitted by the second satellite, and the second signal may be transmitted to the second satellite based on the first initial point ahead angle, wherein the first signal and the second signal comprise a plurality of partially coherent beam signals.

The first satellite may acquire a target distance between the first satellite and the second satellite based on the received first signal, and determine the first initial point ahead angle of the first satellite relative to the second satellite according to the target distance.

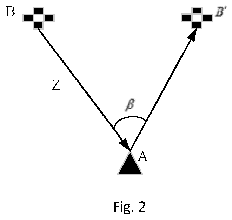

Referring to FIG. 2, taking the first satellite as a satellite A and the second satellite as a satellite B for example, a target distance between the satellite A and the satellite B is Z, wherein Z=c*Δt, where c represents velocity of light. If a relative speed of the satellite B moving to the satellite B' is w, then a relative angle of the satellite B moving within the Δt time is β * w*Δt, and the first initial point ahead angle of the first satellite relative to the second satellite is w*Δt.

The communication method may further comprise Step 104, the first satellite determining a first target point ahead angle according to a first angle at full width at half maximum of a main lobe of a light beam in the second signal and the first initial point ahead angle.

In order to accurately control the point ahead of the satellite, the first initial point ahead angle can be corrected according to the first angle at full width at half maximum of the main lobe of the light beam in the second signal, to determine the first target point ahead angle. In the above embodiments, the first initial point ahead angle is corrected based on the first angle at full width at half maximum of the main lobe of the light beam in the second signal, to obtain the more accurate first target point ahead angle.

The communication method may further comprise Step 105, the first satellite transmitting a third signal to the second satellite according to the first target point ahead angle.

The communication method may further comprise Step 106, the second satellite transmitting a fourth signal to the first satellite in response to the third signal, wherein the third signal and the fourth signal comprise coherent beam signals.

In order to accurately complete communication link establishment between the first satellite and the second satellite having antennas with the coaxial structure for satellite communications, as an example, the first satellite transmits the third signal to the second satellite based on the first target point ahead angle. The second satellite may accurately receive the third signal, and the second satellite may transmit the fourth signal to the first satellite after receiving the third signal.

The communication method may further comprise Step 107, the first satellite transmitting a fifth signal carrying first communication data to the second satellite in response to the fourth signal transmitted by the second satellite.

The communication method may further comprise Step 108, the second satellite transmitting a sixth signal carrying second communication data to the first satellite in response to the fifth signal, wherein the fifth signal and the sixth signal comprise coherent beam signals.

In the above embodiments, when receiving the fourth signal transmitted by the second satellite, the first satellite transmits the fifth signal carrying the first communication data to the second satellite. The second satellite thereby transmits the sixth signal carrying the second communication data to the first satellite in response to the received fifth signal.

As a possible implementation, the first satellite may transmit the second signal, the third signal, and the fifth signal through a phased array antenna, and receive the first signal, the fourth signal, and the sixth signal transmitted by the second satellite through the phased array antenna. The second satellite may transmit the first signal, the fourth signal, and the sixth signal through a phased array antenna, and the second satellite may receive the second signal, the third signal, and the fifth signal transmitted by the first satellite through the phased array antenna.

As an example, the second signal, the third signal, the fifth signal are phased array signals transmitted by the first satellite through a first phased array antenna, and the first signal, the fourth signal, and the sixth signal are phased array signals received by the first satellite through the first phased array antenna. The first signal, the fourth signal, and the sixth signal are phased array signals transmitted by the second satellite through a second phased array antenna, and the second signal, the third signal, and the fifth signal are phased array signals received by the second satellite through the second phased array antenna.

In summary, the first satellite calculates the first initial point ahead angle of the first satellite relative to the second satellite based on the received first signal transmitted by the second satellite, and transmits the second signal to the second satellite according to the first initial point ahead angle, which achieves point ahead angle of the satellite having an antenna in which the transmitting optical axis and the receiving optical axis are in a coaxial structure. The first satellite determines the first target point ahead angle according to the first angle at full width at half maximum of the main lobe of the light beam in the second signal and the first initial point ahead angle, which achieves the correction of the first initial point ahead angle. Then the first satellite transmits the third signal to the second satellite according to the corrected first target point ahead angle, so that the second satellite accurately receives the third signal, which precisely controls the point ahead of the satellite having the antenna with the coaxial structure. Further, the first satellite transmits the fifth signal carrying the first communication data to the second satellite in case of receiving the fourth signal transmitted by the second satellite, and the second satellite transmits the sixth signal carrying the second communication data to the first satellite in case of receiving the fifth signal, which achieves satellite communications on the basis of accurately completing communication link establishment between the first satellite and the second satellite having the antennas in which the transmitting optical axis and the receiving optical axis are in the coaxial structure, improving the applicability of the method.

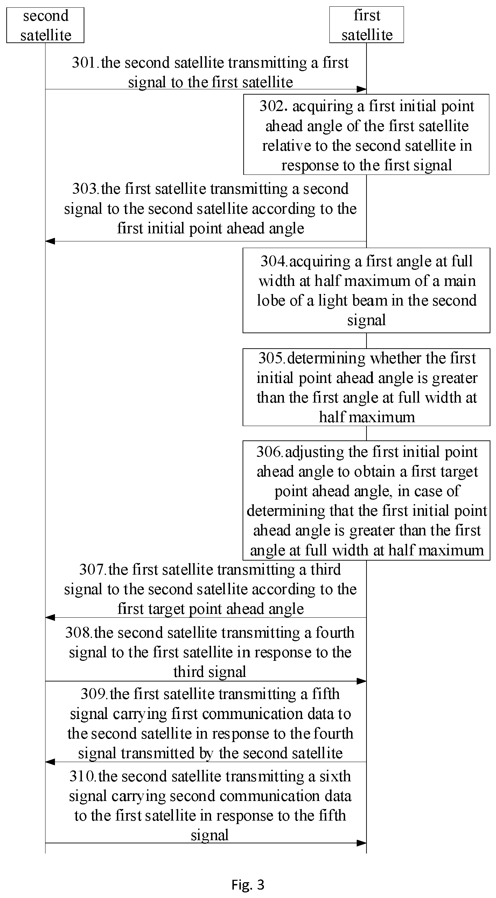

To clearly illustrate in the embodiment, how to determine the first target point ahead angle according to the first angle at full width at half maximum of the main lobe of the light beam in the second signal and the first initial point ahead angle, the present disclosure proposes a second communication method. As shown in FIG. 3, the communication method may comprise the steps of: Step 301, a second satellite transmitting a first signal to a first satellite; Step 302, the first satellite acquiring a first initial point ahead angle of the first satellite relative to the second satellite in response to the first signal; and Step 303, the first satellite transmitting a second signal to the second satellite according to the first initial point ahead angle, wherein the first signal and the second signal comprise a plurality of partially coherent beam signals.

It should be noted that, in order to obtain signal light with a large divergence angle and improve the point ahead pointing precision, the second signal may be obtained by adding perturbation to each of the plurality of incoherent beam signals, and the light intensity distribution of each beam signal in the second signal is uniform. Similarly, the first signal may also be obtained by adding perturbation to each of the plurality of incoherent beam signals, and the light intensity distribution of each beam signal in the first signal is uniform.

The communication method may further comprise Step 304, the first satellite acquiring a first angle at full width at half maximum of a main lobe of a light beam in the second signal.

As an example, the first satellite determines a target beam signal from all beam signals in the second signal and acquires a divergence angle of the target beam signal. Then the first satellite determines the first angle at full width at half maximum of the main lobe of the light beam in the second signal according to the divergence angle. It should be noted that, the first angle at full width at half maximum of the main lobe of the light beam in the second signal and the divergence angle of the target beam signal may be in a positive correlation. The target beam signal may be any beam signal in the second signal, or the target beam signal is a designated beam signal (e.g., a main lobe beam) of the second signal, which is not limited in this disclosure.

For example, in a case where the second signal is N (N, M is a positive integer), the divergence angle of the target beam signal in the second signal can be represented as θ_{trac} =2.44λ/D₁, where λ represents the wavelength of the target beam signal, and D₁ is a diameter of a vector antenna transmitting the second signal. The first angle at full width at half maximum of the main lobe of the light beam in the second signal and the divergence angle θ_{trac} of the target beam signal are in a positive correlation, that is, the larger the θ_{trac}, the larger the first angle at full width at half maximum of the main lobe of the light beam in the second signal.

In addition, it should be noted that the phased array antenna is in a matrix structure, and the phased array antenna can realize three-dimensional vector scanning, respectively in three directions of Tip/Tilt/Piston (TTP), wherein Tip, generally refers to an angle change of each antenna element in the array in a horizontal direction. Tilt, generally refers to an angle change of each antenna element in the array in a tilt direction. Piston, generally refers to a phase change of each antenna element beam in the array in a transmission direction. By adjusting the three directions, beam phase scanning can be realized, to change the beam direction of the array.

The communication method may further comprise Step 305, the first satellite determining whether the first initial point ahead angle is greater than the first angle at full width at half maximum.

In the above embodiments, the first initial point ahead angle is compared with the first angle at full width at half maximum to determine whether the first initial point ahead angle is greater than the first angle at full width at half maximum.

The communication method may further comprise Step 306, in case of determining that the first initial point ahead angle is greater than the first angle at full width at half maximum, the first satellite adjusting the first initial point ahead angle to obtain a first target point ahead angle.

In order to precisely control the point ahead of the satellite, as an example, when the first initial point ahead angle is greater than the first angle at full width at half maximum, a first closed-loop tracking point corresponding to the first satellite transmitting an incoherent beam and a second closed-loop tracking point corresponding to the first satellite receiving an incoherent beam are acquired. The first initial point ahead angle is adjusted according to the first closed-loop tracking point and the second closed-loop tracking point to obtain the first target point ahead angle, wherein the transmitted beam that is transmitted at the first target point ahead angle coincides with the first closed-loop tracking point and the received beam that is received at the first target point ahead angle coincides with the second closed-loop tracking point.

That is, when the first initial point ahead angle is greater than the first angle at full width at half maximum, Piston of the phased array antenna of the first satellite may be adjusted to correct a pointing angle (point ahead angle) of the transmitted beam and a closed-loop tracking point of the received beam, so that the point ahead angle pointing of the transmitted beam may be achieved by phase control of the transmitted beam. The closed-loop tracking angle of the received beam may be achieved by phase control of the received beam, which is a different beam angle from the pointing angle of the transmitted beam, at which time, the gains of the transmitted and received beams are respectively maximized.

As another example, in a case where the first initial point ahead angle is less than or equal to the first angle at full width at half maximum, the first initial point ahead angle is taken as the first target point ahead angle.

That is, in a case where the first initial point ahead angle is less than or equal to the first angle at full width at half maximum, the first initial point ahead angle is taken as the first target point ahead angle, such that the optical power of the transmitted beam reaching the opposite party approximates the optical power of the received beam from the opposite party.

The communication method may further comprise: Step 307, the first satellite transmitting a third signal to the second satellite according to the first target point ahead angle; Step 308, the second satellite transmitting a fourth signal to the first satellite in response to the third signal, wherein the third signal and the fourth signal comprise coherent beam signals; Step 309, the first satellite transmitting a fifth signal carrying first communication data to the second satellite in response to the fourth signal transmitted by the second satellite; Step 310, the second satellite transmitting a sixth signal carrying second communication data to the first satellite in response to the fifth signal, wherein the fifth signal and the sixth signal comprise coherent beam signals.

It should be noted that, reference may be made to other embodiments for the implementation of steps 307 to 310, and this is not limited in the embodiment of the present disclosure and is not described again.

In summary, by acquiring the first angle at full width at half maximum of the main lobe of the light beam in the second signal, determining whether the first initial point ahead angle is greater than the first angle at full width at half maximum, and adjusting the first initial point ahead angle to obtain the first target point ahead angle in a case where the first initial point ahead angle is greater than the first angle at full width at half maximum, the first initial point ahead angle is corrected in a case where the first initial point ahead angle is greater than the first angle at full width at half maximum, thereby transmitting the third signal to the second satellite according to the corrected first target point ahead angle, such that the second satellite accurately receives the third signal. Precise control of the point ahead of the satellite is therefore achieved, meanwhile, operations such as signal acquisition, tracking and pointing are achieved without the assistance of beacon beam, reducing complexity of the point ahead.

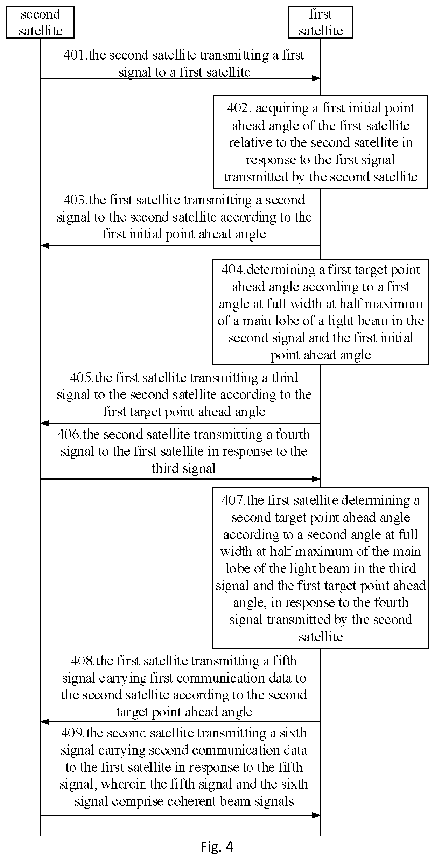

To clearly illustrate in the above embodiment, how to transmit the fifth signal carrying the first communication data to the second satellite in response to the fourth signal transmitted by the second satellite, the present disclosure proposes a third communication method. As shown in FIG. 4, the communication method may comprise the steps of: Step 401, the second satellite transmitting a first signal to a first satellite; Step 402, the first satellite acquiring a first initial point ahead angle of the first satellite relative to the second satellite in response to the first signal transmitted by the second satellite; Step 403, the first satellite transmitting a second signal to the second satellite according to the first initial point ahead angle, wherein the first signal and the second signal comprise a plurality of partially coherent beam signals; Step 404, the first satellite determining a first target point ahead angle according to a first angle at full width at half maximum of a main lobe of a light beam in the second signal and the first initial point ahead angle; Step 405, the first satellite transmitting a third signal to the second satellite according to the first target point ahead angle; Step 406, the second satellite transmitting a fourth signal to the first satellite in response to the third signal, wherein the third signal and the fourth signal comprise coherent beam signals; and Step 407, the first satellite determining a second target point ahead angle according to a second angle at full width at half maximum of the main lobe of the light beam in the third signal and the first target point ahead angle, in response to the fourth signal transmitted by the second satellite.

As an example, in a case where the first target point ahead angle is greater than the second angle at full width at half maximum, a third closed-loop tracking point corresponding to the first satellite transmitting coherent beams and a fourth closed-loop tracking point corresponding to the first satellite receiving the coherent beams, are acquired. The first target point ahead angle is adjusted according to the third closed-loop tracking point and the fourth closed-loop tracking point to obtain a second target point ahead angle, wherein the transmitted beam that is transmitted at the second target point ahead angle coincides with the third closed-loop tracking point, and the received beam that is received at the second target point ahead angle coincides with the fourth closed-loop tracking point.

It is to be understood that, when the light beams are coherently superimposed, a divergence angle θ_{trac} of the signal light is θ_{trac}=2.44λ/ND₂, where D₂ is a diameter of a vector antenna transmitting the third signal, N is the number of elements, and λ is wavelength. After coherent beam combination of multiple beams, a far-field main lobe central point of the light beam is a pointing direction of the light beam, the light beam is completely coherent, the divergence angle of the main lobe beam is reduced, and since the divergence angle of the signal light and the second angle at full width at half maximum of the main lobe of the light beam in the third signal are in a positive correlation, the second angle at full width at half maximum of the main lobe of the light beam is reduced.

Therefore, it can be determined whether the first target point ahead angle is greater than the second angle at full width at half maximum of the main lobe of the light beam in the third signal, and in a case where the first target point ahead angle is greater than the second angle at full width at half maximum, the light spot of the transmitted beam in the transmitting phase monitoring camera can be adjusted to a calibrated closed-loop tracking point (the third closed-loop tracking point) by changing the phase in the Piston direction of the vector antenna of the first satellite, such that the optical power of the transmitted beam is maximized. Meanwhile, a transmitter-receiver (TR) high-speed phase shifter in the receiving part is controlled, to adjust the light spot of the received beam in the receiving phase monitoring camera to a calibrated closed-loop tracking point (the fourth closed-loop tracking point), such that the optical power of the received beam is maximized. Therefore, by means of the Piston direction control, the transmitted beam that is transmitted at the second target point ahead angle coincides with the third closed-loop tracking point, and the received beam that is received at the second target point ahead angle coincides with the fourth closed-loop tracking point, improving the control precision of the point ahead.

The communication method may further comprise Step 408, the first satellite transmitting a fifth signal carrying first communication data to the second satellite according to the second target point ahead angle.

The communication method may further comprise Step 409, the second satellite transmitting a sixth signal carrying second communication data to the first satellite in response to the fifth signal, wherein the fifth signal and the sixth signal comprise coherent beam signals.

In summary, by determining whether the first target point ahead angle is greater than the second angle at full width at half maximum of the main lobe of the light beam in the third signal, in response to the fourth signal transmitted by the second satellite, acquiring the third closed-loop tracking point corresponding to the first satellite transmitting coherent beams and the fourth closed-loop tracking point corresponding to the first satellite receiving the coherent beams in a case where the first target point ahead angle is greater than the second angle at full width at half maximum, the first target point ahead angle is adjusted according to the third closed-loop tracking point and the fourth closed-loop tracking point to obtain the second target point ahead angle, wherein the transmitted beam that is transmitted at the second target point ahead angle coincides with the third closed-loop tracking point, and the received beam that is received at the second target point ahead angle coincides with the fourth closed-loop tracking point. By adjusting the first target point ahead angle according to the third closed-loop tracking point and the fourth closed-loop tracking point, the transmitted beam that is transmitted at the second target point ahead angle coincides with the third closed-loop tracking point, and the received beam that is received at the second target point ahead angle coincides with the fourth closed-loop tracking point, thereby improving the control accuracy of the point ahead.

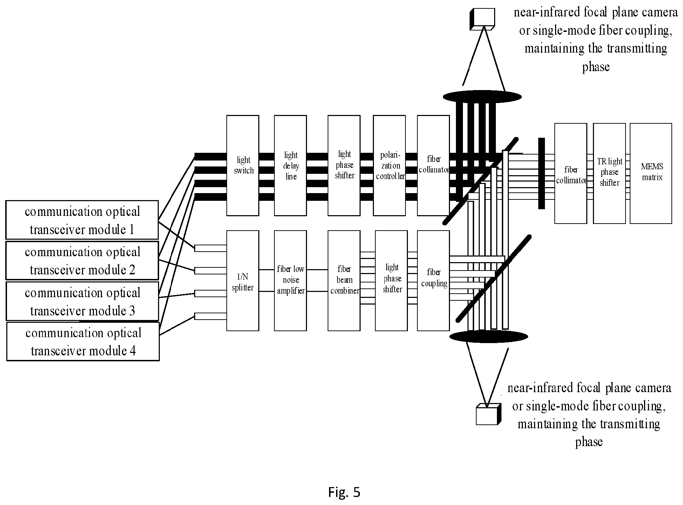

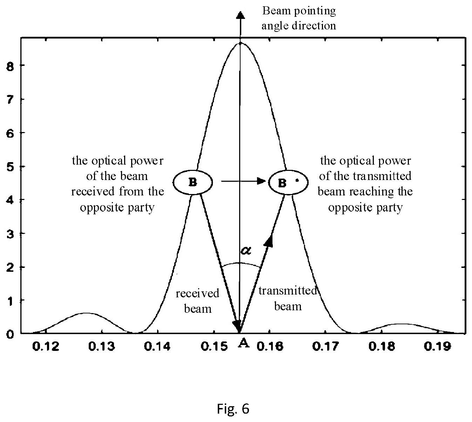

On the basis of any embodiment of the present disclosure, taking the vector antenna of the first satellite as 4×4 as an example, as shown in FIG. 5, the present disclosure may further implement the communication method according to the embodiment of the present application, specifically comprising the following steps: step 1, according to an ephemeris and a relative motion speed of satellite-ground terminals, calculating an instantaneous point ahead angle α in advance; step 2, as shown in FIG. 6, establishing a coordinate system by using positions of laser terminal antennas of the current satellite A (first satellite) and laser terminal receiving antennas of the satellite B (second satellite), wherein the main lobe far-field central direction of the transmitted beam of the laser terminal antennas of the current satellite is the beam transmitting direction, which is equal to half of the point ahead angle α; and step 3, in the partially coherent superposition process, obtaining the divergence angle (the field angle of the receiving optical antenna) as: θ_{trac}=2.44λ/D, wherein λ is the predetermined wavelength of the incoherent (or, coherent) beam, D is the diameter of the vector antenna, and when D =8mm, θ_{trac} =472 urad.

In a case where multiple optical beams are not completely coherent, the Tip/Tilt item is changed to make the optical axis of the emergent beam aim at a position where the pointing angle is half the point ahead angle. In a case where the angle at full width at half maximum of the main lobe of the light beam is not less than the point ahead angle, the optical power of the transmitted beam reaching the opposite party approximates the optical power of the beam received from the opposite party. In a case where the angle at full width at half maximum of the main lobe of the light beam is smaller than the point ahead angle, light spots of the received beam in the receiving phase monitoring camera are respectively adjusted to a closed-loop tracking point calibrated in advance by changing the phase in the Piston direction, and the optical power of the received beam is maximum at the closed-loop tracking point.

The communication method may further comprise step 4. superposing the far-field light beams completely coherently, to calculate the divergence angle of the light beam in the tracking, maintaining and communication stages: θ_{trac} =2.44λ/ND, wherein N =8, then θ_{trac} =59urad.

Since when the current satellite transmits coherent beams, the width of the main lobe of the transmitted beam is narrowed, a high-speed phase shifter in the transmitting part of the transmitting beam is controlled, and the light spot of the transmitted beam in a transmitting phase monitoring camera is adjusted to a calibrated closed-loop tracking point by changing the phase in the Piston direction, so that the optical power of the transmitted beam is maximum. Meanwhile, a high-speed phase shifter in the receiving part is controlled, and the light spot of the received beam in a receiving phase monitoring camera is adjusted to the calibrated closed-loop tracking point, so that the optical power of the received beam is maximum.

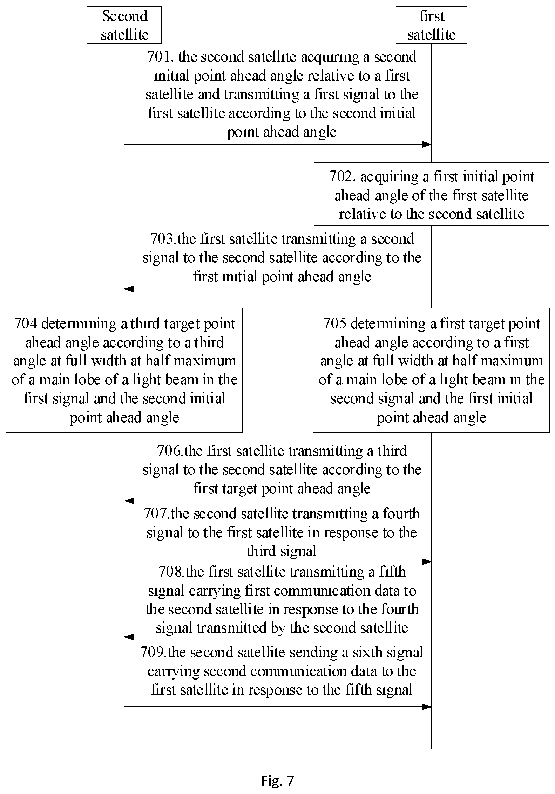

FIG. 7 is an interaction flow diagram of a communication method provided by an embodiment of the present disclosure. As shown in FIG. 7, the communication method may comprise Step 701, the second satellite acquiring a second initial point ahead angle relative to a first satellite and transmitting a first signal to the first satellite according to the second initial point ahead angle, wherein the first signal comprises a plurality of partially coherent beam signals.

To achieve point ahead pointing of the second satellite with respect to the first satellite, as an example, the second initial point ahead angle of the second satellite relative to the first satellite may be determined based on a distance between the second satellite and the first satellite, and the first signal may be transmitted to the first satellite based on the second initial point ahead angle, the first signal comprising a plurality of partially coherent beam signals. The second initial point ahead angle may be equal to the first initial point ahead angle, or may not be equal to the first initial point ahead angle.

The communication method may further comprise: Step 702, the first satellite acquiring a first initial point ahead angle of the first satellite relative to the second satellite, in response to the first signal; Step 703, the first satellite transmitting a second signal to the second satellite according to the first initial point ahead angle, wherein the first signal and the second signal comprise a plurality of partially coherent beam signals; Step 704, the second satellite determining a third target point ahead angle according to a third angle at full width at half maximum of a main lobe of a light beam in the first signal and the second initial point ahead angle.

The third target point ahead angle is determined according to the third angle at full width at half maximum of the main lobe of the light beam in the first signal and the second initial point ahead angle. A fourth signal is transmitted to the first satellite according to the third target point ahead angle.

In some alternative implementations, the third angle at full width at half maximum of the main lobe of the light beam in the first signal may be compared to the second initial point ahead angle, and in a case where the second initial point ahead angle is greater than the third angle at full width at half maximum of the main lobe of the light beam in the first signal, the second initial point ahead angle may be adjusted to obtain the third target point ahead angle.

In a case where the second initial point ahead angle is less than or equal to the third angle at full width at half maximum of the main lobe of the light beam in the first signal, the second initial point ahead angle is taken as the third target point ahead angle.

In some optional implementations, a fifth closed-loop tracking point corresponding to the second satellite transmitting incoherent beams and a sixth closed-loop tracking point corresponding to the second satellite receiving the incoherent beams are obtained.

The second initial point ahead angle is adjusted according to the fifth closed-loop tracking point and the sixth closed-loop tracking point to obtain the third target point ahead angle, wherein the transmitted beam that is transmitted at the third target point ahead angle coincides with the closed-loop tracking point corresponding to the second satellite transmitting the incoherent beams, and the received beam that is received at the third target point ahead angle coincides with the closed-loop tracking point corresponding to the second satellite receiving the incoherent beams.

The communication method may further comprise: Step 705, the first satellite determining a first target point ahead angle according to a first angle at full width at half maximum of a main lobe of a light beam in the second signal and the first initial point ahead angle; Step 706, the first satellite transmitting a third signal to the second satellite according to the first target point ahead angle; Step 707, the second satellite transmitting a fourth signal to the first satellite in response to the third signal, wherein the third signal and the fourth signal comprise coherent beam signals.

To enable communication link establishment between the first satellite and the second satellite, as an example, the fourth signal is transmitted to the first satellite according to the third target point ahead angle, in response to the third signal transmitted by the first satellite.

The communication method may further comprise: Step 708, the first satellite transmitting a fifth signal carrying first communication data to the second satellite in response to the fourth signal transmitted by the second satellite; Step 709, the second satellite sending a sixth signal carrying second communication data to the first satellite in response to the fifth signal, wherein the fifth signal and the sixth signal comprise coherent beam signals.

In the embodiment of the present disclosure, after the first satellite receives the fourth signal, the fifth signal carrying the first communication data is transmitted to the second satellite. Therefore, the second satellite can receive the fifth signal carrying the first communication data transmitted by the first satellite, and in response to the fifth signal carrying the first communication data transmitted by the first satellite, the sixth signal carrying the second communication data is transmitted to the first satellite.

It should be noted that, in order to further improve the point ahead control of the second satellite, before receiving the fifth signal carrying the first communication data transmitted by the first satellite, it is determined whether the third target point ahead angle is greater than an angle at full width at half maximum of a main lobe of a light beam in the fourth signal.

In a case where the third target point ahead angle is greater than the angle at full width at half maximum of the main lobe of the light beam in the fourth signal, the third target point ahead angle is adjusted to obtain a fourth target point ahead angle. Otherwise, the third target point ahead angle is taken as the fourth target point ahead angle.

A sixth signal is transmitted to the first satellite according to the fourth target point ahead angle.

In some alternative implementations, the transmitted beam that is transmitted at the fourth target point ahead angle coincides with the closed-loop tracking point where the second satellite transmits coherent beams, and the received beam that is received at the fourth target point ahead angle coincides with the closed-loop tracking point where the second satellite receives the coherent beams. The second satellite transmits the sixth signal to the first satellite according to the fourth target point ahead angle.

In summary, by acquiring the second initial point ahead angle of the second satellite relative to the first satellite, the first signal is transmitted to the first satellite according to the second initial point ahead angle. The third target point ahead angle is determined according to the third angle at full width at half maximum of the main lobe of the light beam in the first signal and the second initial point ahead angle in response to the second signal transmitted by the first satellite. The fourth signal is transmitted to the first satellite according to the third target point ahead angle in response to the third signal transmitted by the first satellite. The sixth signal carrying second communication data is transmitted to the first satellite in response to the fifth signal carrying first communication data transmitted by the first satellite, whereby the second satellite transmits the first signal to the first satellite through the second initial point ahead angle, the first satellite calculates the first initial point ahead angle of the first satellite relative to the second satellite based on the received first signal transmitted by the second satellite, and transmits the second signal to the second satellite according to the first initial point ahead angle. Point ahead pointing of the satellite having an antenna with the coaxial structure is achieved. By determining the first target point ahead angle according to the first angle at full width at half maximum of the main lobe of the light beam in the second signal and the first initial point ahead angle, the first initial point ahead angle is corrected. By transmitting the third signal to the second satellite according to the corrected first target point ahead angle, such that the second satellite can accurately receive the third signal, the point ahead of the satellite having the antenna with the coaxial structure is precisely controlled. Furthermore, the second satellite can precisely transmit the fourth signal to the first satellite according to the third target point ahead angle. The first satellite transmits the fifth signal carrying first communication data to the second satellite when the fourth signal transmitted by the second satellite is received, and transmits the sixth signal carrying second communication data to the first satellite in a case where the fifth signal is received by the second satellite. Satellite communications are performed on the basis of communication link establishment between the first satellite and the second satellite having the antenna in which the transmitting optical axis and the receiving optical axis are in the coaxial structure being accurately completed, thereby improving applicability of the method.

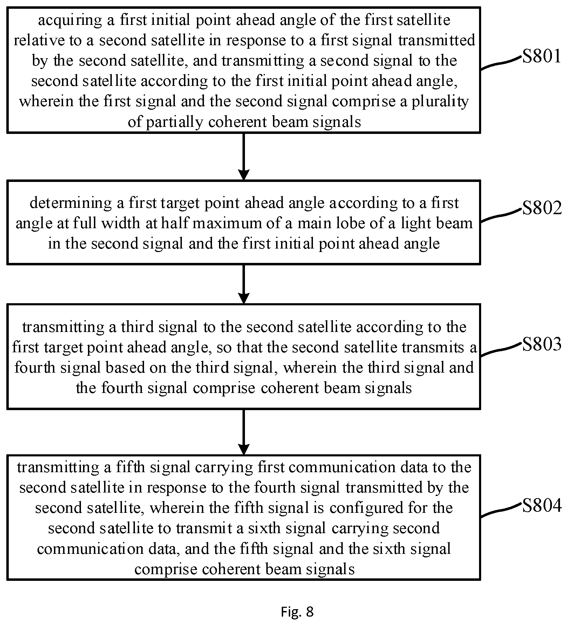

In the embodiment of the present application, as shown in FIG. 8, the communication method performed by the first satellite comprises the following steps: Step 801, acquiring a first initial point ahead angle of the first satellite relative to a second satellite in response to a first signal transmitted by the second satellite, and transmitting a second signal to the second satellite according to the first initial point ahead angle, wherein the first signal and the second signal comprise a plurality of partially coherent beam signals; Step 802, determining a first target point ahead angle according to a first angle at full width at half maximum of a main lobe of a light beam in the second signal and the first initial point ahead angle; Step 803, transmitting a third signal to the second satellite according to the first target point ahead angle, so that the second satellite transmits a fourth signal based on the third signal, wherein the third signal and the fourth signal comprise coherent beam signals; Step 804, transmitting a fifth signal carrying first communication data to the second satellite in response to the fourth signal transmitted by the second satellite, wherein the fifth signal is configured for the second satellite to transmit a sixth signal carrying second communication data, and the fifth signal and the sixth signal comprise coherent beam signals.

In some alternative implementations, the determining a first target point ahead angle according to a first angle at full width at half maximum of a main lobe of a light beam in the second signal and the first initial point ahead angle comprises: determining whether the first initial point ahead angle is greater than the first angle at full width at half maximum; adjusting the first initial point ahead angle to obtain the first target point ahead angle, in a case where the first initial point ahead angle is greater than the first angle at full width at half maximum.

In some alternative implementations, the adjusting the first initial point ahead angle to obtain the first target point ahead angle comprises: acquiring a first closed-loop tracking point corresponding to the first satellite transmitting incoherent beams and a second closed-loop tracking point corresponding to the first satellite receiving the incoherent beams; adjusting the first initial point ahead angle according to the first closed-loop tracking point and the second closed-loop tracking point, to obtain the first target point ahead angle, wherein the transmitted beam that is transmitted at the first target point ahead angle coincides with the first closed-loop tracking point, and the received beam that is received at the first target point ahead angle coincides with the second closed-loop tracking point.

In some alternative implementations, the first angle at full width at half maximum is acquired by: determining a target beam signal from each beam signal in the second signals; and determining the first angle at full width at half maximum according to a divergence angle of the target beam signal.

In some alternative implementations, the method further comprises: taking the first initial point ahead angle as the first target point ahead angle, in a case where the first initial point ahead angle is less than or equal to the first angle at full width at half maximum.

In some alternative implementations, the method further comprises, before the transmitting a second signal to the second satellite according to the first initial point ahead angle: adding perturbation respectively to a plurality of incoherent beam signals to obtain the second signal, wherein light intensity distribution of each beam signal in the second signal is uniform.

In some alternative implementations, the transmitting a fifth signal carrying first communication data to the second satellite comprises: determining a second target point ahead angle according to a second angle at full width at half maximum of a main lobe of a light beam in the third signal and the first target point ahead angle; and transmitting the fifth signal to the second satellite according to the second target point ahead angle.

In some alternative implementations, the determining a second target point ahead angle according to a second angle at full width at half maximum of a main lobe of a light beam in the third signal and the first target point ahead angle, comprises: determining whether the first target point ahead angle is greater than the second angle at full width at half maximum; acquiring a third closed-loop tracking point corresponding to the first satellite transmitting coherent beams and a fourth closed-loop tracking point corresponding to the first satellite receiving the coherent beams, in a case where the first target point ahead angle is greater than the second angle at full width at half maximum; adjusting the first target point ahead angle according to the third closed-loop tracking point and the fourth closed-loop tracking point to obtain the second target point ahead angle, wherein the transmitted beam that is transmitted at the second target point ahead angle coincides with the third closed-loop tracking point, and the received beam that is received at the second target point ahead angle coincides with the fourth closed-loop tracking point.

In some alternative implementations, the acquiring a first initial point ahead angle of the first satellite relative to the second satellite, comprises: determining the first initial point ahead angle based on a target distance between the first satellite and the second satellite.

In some alternative implementations, the second signal, the third signal, and the fifth signal are phased array signals transmitted by the first satellite through a phased array antenna; the first signal, the fourth signal, and the sixth signal are phased array signals received by the first satellite through the phased array antenna.

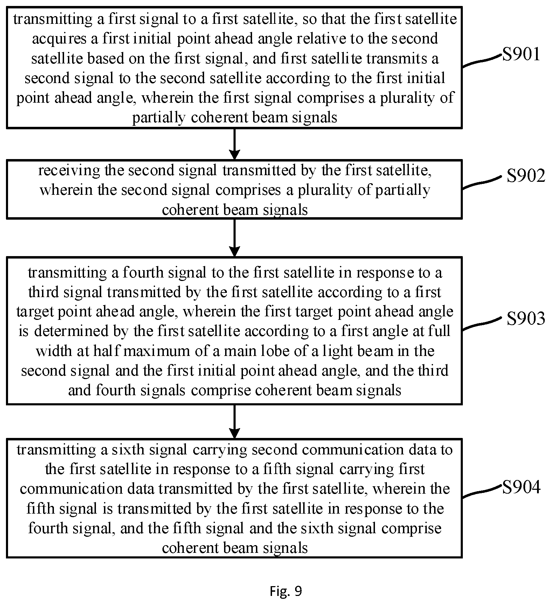

In the embodiment of the present application, as shown in FIG. 9, the communication method performed by the second satellite comprises the following steps: Step 901, transmitting a first signal to a first satellite, so that the first satellite acquires a first initial point ahead angle relative to the second satellite based on the first signal, and first satellite transmits a second signal to the second satellite according to the first initial point ahead angle, wherein the first signal comprises a plurality of partially coherent beam signals; Step 902, receiving the second signal transmitted by the first satellite, wherein the second signal comprises a plurality of partially coherent beam signals; Step 903, transmitting a fourth signal to the first satellite in response to a third signal transmitted by the first satellite according to a first target point ahead angle, wherein the first target point ahead angle is determined by the first satellite according to a first angle at full width at half maximum of a main lobe of a light beam in the second signal and the first initial point ahead angle, and the third and fourth signals comprise coherent beam signals; Step 904, transmitting a sixth signal carrying second communication data to the first satellite in response to a fifth signal carrying first communication data transmitted by the first satellite, wherein the fifth signal is transmitted by the first satellite in response to the fourth signal, and the fifth signal and the sixth signal comprise coherent beam signals.

In some alternative implementations, the transmitting a first signal to a first satellite, comprises: transmitting the first signal to the first satellite based on a second initial point ahead angle of the second satellite relative to the first satellite.

In some alternative implementations, the method further comprises, after the receiving a second signal transmitted by the first satellite: determining a third target point ahead angle according to a third angle at full width at half maximum of a main lobe of a light beam in the first signal and the second initial point ahead angle, wherein the transmitting a fourth signal to the first satellite, comprises: transmitting the fourth signal to the first satellite according to the third target point ahead angle.

In some alternative implementations, the determining a third target point ahead angle according to a third angle at full width at half maximum of a main lobe of a light beam in the first signal and the second initial point ahead angle, comprises: determining whether the second initial point ahead angle is greater than the third angle at full width at half maximum; adjusting the second initial point ahead angle to obtain the third target point ahead angle, in a case where the second initial point ahead angle is greater than the third angle at full width at half maximum; or taking the second initial point ahead angle as the third target point ahead angle, in a case where the second initial point ahead angle is less than or equal to the third angle at full width at half maximum.

In some alternative implementations, the adjusting the second initial point ahead angle to obtain the third target point ahead angle, comprises: acquiring a fifth closed-loop tracking point corresponding to the second satellite transmitting incoherent beams and a sixth closed-loop tracking point corresponding to the second satellite receiving the incoherent beams; adjusting the second initial point ahead angle according to the fifth closed-loop tracking point and the sixth closed-loop tracking point to obtain the third target point ahead angle, wherein the transmitted beam that is transmitted at the third target point ahead angle coincides with a closed-loop tracking point corresponding to the second satellite transmitting incoherent beams, and the received beam that is received at the third target point ahead angle coincides with a closed-loop tracking point corresponding to the second satellite receiving the incoherent beams.

In some alternative implementations, the transmitting a sixth signal carrying second communication data to the first satellite, comprises: determining a fourth target point ahead angle according to a fourth angle at full width at half maximum of a main lobe of a light beam in the fourth signal and the third target point ahead angle; and transmitting the sixth signal to the first satellite according to the fourth target point ahead angle.

In some alternative implementations, the determining a fourth target point ahead angle according to a fourth angle at full width at half maximum of a main lobe of a light beam in the fourth signal and the third target point ahead angle, comprises: determining whether the third target point ahead angle is greater than the fourth angle at full width at half maximum; acquiring a seventh closed-loop tracking point corresponding to the second satellite transmitting coherent beams and an eighth closed-loop tracking point corresponding to the second satellite receiving the coherent beams, in a case where the third target point ahead angle is greater than the fourth angle at full width at half maximum; and adjusting the third target point ahead angle according to the seventh closed-loop tracking point and the eighth closed-loop tracking point to obtain the fourth target point ahead angle, wherein the transmitted beam that is transmitted at the fourth target point ahead angle coincides with the seventh closed-loop tracking point and the received beam that is received at the fourth target point ahead angle coincides with the eighth closed-loop tracking point.

For specific implementations of the embodiments in FIG. 8 to FIG. 9, reference may be made to the implementation of the above interaction method, which is not described herein again.

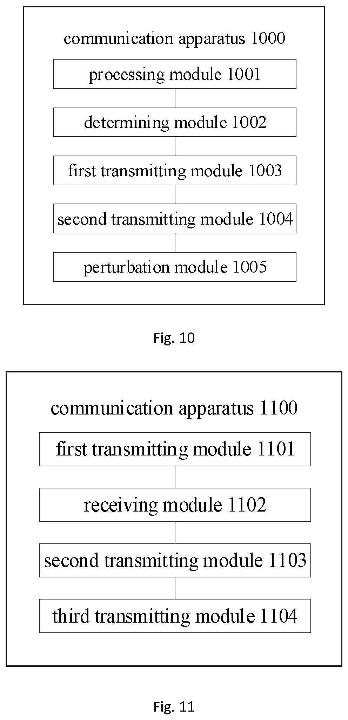

As shown in FIG. 10, based on the same inventive concept as the communication method shown in FIG. 8, an embodiment of the present application provides a first communication apparatus 1000, applied to a first satellite, comprising: a processing module 1001 configured to, acquire a first initial point ahead angle of the first satellite relative to a second satellite in response to a first signal transmitted by the second satellite, and transmit a second signal to the second satellite according to the first initial point ahead angle, wherein the first signal and the second signal comprise a plurality of partially coherent beam signals; a first determining module 1002 configured to, determine a first target point ahead angle according to a first angle at full width at half maximum of a main lobe of a light beam in the second signal and the first initial point ahead angle; a first transmitting module 1003 configured to, transmit a third signal to the second satellite according to the first target point ahead angle, such that the second satellite transmits a fourth signal based on the third signal, wherein the third signal and the fourth signal comprise coherent beam signals; and a second transmitting module 1004 configured to, transmit a fifth signal carrying first communication data to the second satellite in response to the fourth signal transmitted by the second satellite, wherein the fifth signal is configured for the second satellite to transmit a sixth signal carrying second communication data, and the fifth signal and the sixth signal comprise coherent beam signals.

As a possible implementation of the embodiment of the present disclosure, the first determining module 1002 is specifically configured to: determine whether the first initial point ahead angle is greater than the first angle at full width at half maximum; and adjust the first initial point ahead angle to obtain the first target point ahead angle, in a case where the first initial point ahead angle is greater than the first angle at full width at half maximum.

As a possible implementation of the embodiment of the present disclosure, the first determining module 1002 is specifically configured to: acquire a first closed-loop tracking point corresponding to the first satellite transmitting incoherent beams and a second closed-loop tracking point corresponding to the first satellite receiving the incoherent beams; and adjust the first initial point ahead angle according to the first closed-loop tracking point and the second closed-loop tracking point, to obtain the first target point ahead angle, wherein the transmitted beam that is transmitted at the first target point ahead angle coincides with the first closed-loop tracking point, and the received beam that is received at the first target point ahead angle coincides with the second closed-loop tracking point.

As a possible implementation of the embodiment of the present disclosure, the first determining module 1002 is further configured to: determine a target beam signal from each beam signal in the second signal; and determine the first angle at full width at half maximum according to a divergence angle of the target beam signal.

As a possible implementation of the embodiment of the present disclosure, the first determining module 1002 is further configured to: take the first initial point ahead angle as the first target point ahead angle, in a case where the first initial point ahead angle is less than or equal to the first angle at full width at half maximum.

As a possible implementation of the embodiment of the present disclosure, the apparatus further comprises a perturbation module 1005 configured to: add perturbation respectively to a plurality of incoherent beam signals to obtain the second signal, wherein light intensity distribution of each beam signal in the second signal is uniform.

As a possible implementation of the embodiment of the present disclosure, the second transmitting module 1004 is specifically configured to: determine a second target point ahead angle according to a second angle at full width at half maximum of a main lobe of a light beam in the third signal and the first target point ahead angle; and transmit the fifth signal to the second satellite according to the second target point ahead angle.

As a possible implementation of the embodiment of the present disclosure, the second transmitting module 1004 is specifically configured to: determine whether the first target point ahead angle is greater than the second angle at full width at half maximum; acquire a third closed-loop tracking point corresponding to the first satellite transmitting coherent beams and a fourth closed-loop tracking point corresponding to the first satellite receiving the coherent beams, in a case where the first target point ahead angle is greater than the second angle at full width at half maximum; and adjust the first target point ahead angle according to the third closed-loop tracking point and the fourth closed-loop tracking point, to obtain the second target point ahead angle, wherein the transmitted beam that is transmitted at the second target point ahead angle coincides with the third closed-loop tracking point, and the received beam that is received at the second target point ahead angle coincides with the fourth closed-loop tracking point.

As a possible implementation of the embodiment of the present disclosure, the processing module 1001 is specifically configured to: determining the first initial point ahead angle based on a target distance between the first satellite and the second satellite.

As a possible implementation of the embodiment of the present disclosure, the second signal, the third signal, and the fifth signal are phased array signals transmitted by the first satellite through a phased array antenna, and the first signal, the fourth signal, and the sixth signal are phased array signals received by the first satellite through the phased array antenna.

In order to implement the embodiment of FIG. 7, another communication apparatus is proposed in the embodiment of the present disclosure.

As shown in FIG. 11, based on the same inventive concept as the communication method shown in FIG. 9, an embodiment of the present application provides a first communication apparatus 1100 applied to a second satellite, comprising: an acquiring module 1101 configured to, transmit a first signal to a first satellite, such that the first satellite acquires a first initial point ahead angle relative to the second satellite based on the first signal, and transmit a second signal to the second satellite according to the first initial point ahead angle, wherein the first signal comprises a plurality of partially coherent beam signals; a second determining module 1102 configured to, receive the second signal transmitted by the first satellite, wherein the second signal comprises a plurality of partially coherent beam signals; a transmitting module 1103 configured to, transmit a fourth signal to the first satellite in response to a third signal transmitted by the first satellite according to a first target point ahead angle, wherein the first target point ahead angle is transmitted by the first satellite according to the first target point ahead angle, and the first target point ahead angle is determined from a first angle at full width at half maximum of a main lobe of a light beam in the second signal and the first initial point ahead angle, and the third signal and the fourth signal comprise coherent beam signals; and a receiving module 1104 configured to, transmit a sixth signal carrying second communication data to the first satellite in response to a fifth signal carrying first communication data transmitted by the first satellite, wherein the fifth signal is transmitted by the first satellite in response to the fourth signal, and the fifth signal and the sixth signal comprise coherent beam signals.

In some alternative implementations, the acquiring module 1101 is specifically configured to: transmit the first signal to the first satellite based on a second initial point ahead angle of the second satellite relative to the first satellite.

In some alternative implementations, the second determining module 1102 is further configured to: determine a third target point ahead angle according to a third angle at full width at half maximum of a main lobe of a light beam in the first signal and the second initial point ahead angle, after receiving the second signal transmitted by the first satellite; the transmitting module 1103 is further configured to: transmit the fourth signal to the first satellite according to the third target point ahead angle.

In some alternative implementations, the second determining module 1102 is specifically configured to: determine whether the second initial point ahead angle is greater than the third angle at full width at half maximum; and adjust the second initial point ahead angle to obtain the third target point ahead angle, in a case where the second initial point ahead angle is greater than the third angle at full width at half maximum; or take the second initial point ahead angle as the third target point ahead angle, in a case where the second initial point ahead angle is less than or equal to the third angle at full width at half maximum.

In some alternative implementations, the second determining module 1102 is specifically configured to: acquire a fifth closed-loop tracking point corresponding to the second satellite transmitting incoherent beams and a sixth closed-loop tracking point corresponding to the second satellite receiving the incoherent beams; and adjust the second initial point ahead angle according to the fifth closed-loop tracking point and the sixth closed-loop tracking point, to obtain the third target point ahead angle, wherein the transmitted beam that is transmitted at the third target point ahead angle coincides with a closed-loop tracking point corresponding to the second satellite transmitting incoherent beams, and the received beam that is received at the third target point ahead angle coincides with a closed-loop tracking point corresponding to the second satellite receiving the incoherent beams.

In some alternative implementations, the receiving module 1104 is specifically configured to: determine a fourth target point ahead angle according to a fourth angle at full width at half maximum of a main lobe of a light beam in the fourth signal and the third target point ahead angle; and transmit the sixth signal to the first satellite according to the fourth target point ahead angle.

In some alternative implementations, the receiving module 1104 is specifically configured to: determine whether the third target point ahead angle is greater than the fourth angle at full width at half maximum; acquire a seventh closed-loop tracking point corresponding to the second satellite transmitting coherent beams and an eighth closed-loop tracking point corresponding to the second satellite receiving the coherent beams, in a case where the third target point ahead angle is greater than the fourth angle at full width at half maximum; and adjust the third target point ahead angle according to the seventh closed-loop tracking point and the eighth closed-loop tracking point, to obtain the fourth target point ahead angle, wherein the transmitted beam that is transmitted at the fourth target point ahead angle coincides with the seventh closed-loop tracking point, and the received beam that is received at the fourth target point ahead angle coincides with the eighth closed-loop tracking point.

It should be noted that the foregoing explanation on the embodiment of the communication method is also applicable to the communication apparatus of the embodiment, and details are not described here.

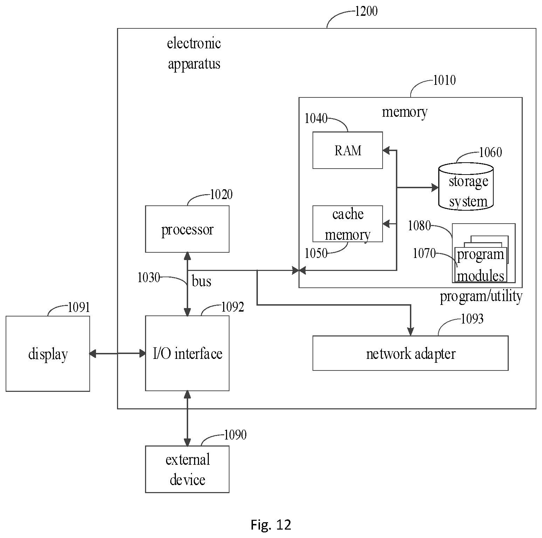

In order to implement the above embodiments, the present application further provides an electronic device, as shown in FIG. 12, and FIG. 12 is a block diagram of an electronic device for communication shown according to an exemplary embodiment.

As shown in FIG. 12, the electronic apparatus 1200 comprises: a memory 1010 and a processor 1020, and a bus 1030 connecting different components (comprising the memory 1010 and the processor 1020), the memory 1010 storing a computer program which, when executed by the processor 1020, implements the communication method according to the embodiments of the present disclosure.

The bus 1030 represents one or more of several types of bus architectures, comprising a memory bus or memory controller, a peripheral bus, a graphical acceleration port, and a processor or local bus using any of a variety of bus architectures. By way of example, such architectures comprise, but are not limited to, Industry Standard Architecture (ISA) bus, micro-channel architecture (MAC) bus, enhanced ISA bus, Video Electronics Standards Association (VESA) local bus, and Peripheral Component Interconnect (PCI) bus.

The electronic device 1200 typically comprises a variety of electronic device readable media. Such media may be any available media that is accessible by the electronic device 1200 and comprises both volatile and nonvolatile media, removable and non-removable media.

The memory 1010 may also comprise computer system readable media in the form of volatile memory, such as Random Access Memory (RAM) 1040 and/or cache memory 1050. The electronic device 1200 may further comprise other removable/non-removable, volatile/nonvolatile computer system storage media. By way of example only, a storage system 1060 may be used to read from and write to non-removable, nonvolatile magnetic media (not shown in FIG. 12, commonly referred to as a "hard disk drive"). Although not shown in FIG. 12, a magnetic disk drive for reading from and writing to a removable, nonvolatile magnetic disk (e.g., a "floppy disk") and an optical disk drive for reading from or writing to a removable, nonvolatile optical disk (e.g., a CD-ROM, DVD-ROM, or other optical media) may be provided. In these cases, each drive may be connected to the bus 1030 via one or more data media interfaces. The memory 1010 may comprise at least one program product having a set (e.g., at least one) of program modules that are configured to carry out the functions of embodiments of the present disclosure.

Program/utility 1080 having a set (at least one) of program modules 1070 may be stored, for example, in the memory 1010, such program modules 1070 comprising, but not limited to, an operating system, one or more application programs, other program modules, and program data, each of which examples or some combination thereof may comprise an implementation of a network environment. Program modules 1070 generally perform the functions and/or methods of the embodiments described in this disclosure.

The electronic device 1200 may also communicate with one or more external devices 1090 (e.g., keyboard, pointing device, display 1091, etc.), with one or more devices that enable a user to interact with the electronic device 1200, and/or with any devices (e.g., network card, modem, etc.) that enable the electronic device 1200 to communicate with one or more other computing devices. Such communication may be made through an input/output (I/O) interface 1092. Also, the electronic device 1200 may communicate with one or more networks (e.g., a Local Area Network (LAN), a Wide Area Network (WAN), and/or a public network such as the internet) via the network adapter 1093. As shown in FIG. 12, the network adapter 1093 communicates with the other modules of the electronic device 1200 via the bus 1030. It should be understood that although not shown in FIG. 12, other hardware and/or software modules may be used in conjunction with the electronic device 1200, comprising but not limited to: microcode, device drivers, redundant processing units, external disk drive arrays, RAID systems, tape drives, and data backup storage systems, to name a few.

The processor 1020 executes various functional applications and data processing by executing programs stored in the memory 1010.

It should be noted that, for the implementation process and the technical principle of the electronic device of the embodiment, reference is made to the foregoing explanation on the communication method of the embodiments of the present disclosure, and details are not described herein again.

In order to implement the above embodiments, the present application further provides a computer-readable storage medium having stored thereon a computer program, which when executed by a processor, implements the communication method described in the above embodiments.

In order to implement the above embodiments, the present disclosure also provides a computer program product, which when executed by an instruction processor in the computer program product, executes the communication method described in the above embodiments.

In the description of the present specification, the terms "first", "second" are configured for descriptive purposes only and are not to be construed as indicating or implying relative importance or to imply the number of indicated technical features. Thus, a feature defined as "first" or "second" may explicitly or implicitly comprise at least one of the features. In the description of the present application, "a plurality" means at least two, e.g., two, three, etc., unless explicitly specified otherwise.

In the description of the specification, reference to the description of terms "one embodiment," "some embodiments," "an example," "a specific example," or "some examples" or the like means that a particular feature, structure, material, or characteristic described in connection with the embodiment or example is comprised in at least one embodiment or example of the application. In this specification, the schematic representations of the terms used above are not necessarily intended to refer to the same embodiment or example. Furthermore, the particular features, structures, materials, or characteristics described may be combined in any suitable manner in any one or more embodiments or examples. Moreover, various embodiments or examples and features of the various embodiments or examples described in this specification can be merged and combined by one skilled in the art.

Although the embodiments of the present application have been shown and described above, it will be understood that the above embodiments are exemplary and not to be construed as limiting the present application, and that changes, modifications, substitutions and alterations can be made to the above embodiments by those of ordinary skill in the art within the scope of the present application.

## Claims

1. A communication method, applied to a first satellite, comprising:
acquiring a first initial point ahead angle of the first satellite relative to a second satellite, in response to a first signal transmitted by the second satellite, and transmitting a second signal to the second satellite according to the first initial point ahead angle, wherein the first signal and the second signal comprise a plurality of partially coherent beam signals;
determining a first target point ahead angle according to a first angle at full width at half maximum of a main lobe of a light beam in the second signal and the first initial point ahead angle;
transmitting a third signal to the second satellite according to the first target point ahead angle, such that the second satellite transmits a fourth signal based on the third signal, wherein the third signal and the fourth signal comprise coherent beam signals; and
transmitting a fifth signal carrying first communication data to the second satellite in response to the fourth signal transmitted by the second satellite, wherein the fifth signal is configured for the second satellite to transmit a sixth signal carrying second communication data, and the fifth signal and the sixth signal comprise coherent beam signals.

2. The method according to claim 1, wherein the determining a first target point ahead angle according to a first angle at full width at half maximum of a main lobe of a light beam in the second signal and the first initial point ahead angle comprises:
determining whether the first initial point ahead angle is greater than the first angle at full width at half maximum; and
adjusting the first initial point ahead angle to obtain the first target point ahead angle, in a case where the first initial point ahead angle is greater than the first angle at full width at half maximum.

3. The method according to claim 2, wherein the adjusting the first initial point ahead angle to obtain the first target point ahead angle comprises:
acquiring a first closed-loop tracking point corresponding to the first satellite transmitting incoherent beams and a second closed-loop tracking point corresponding to the first satellite receiving incoherent beams; and
adjusting the first initial point ahead angle according to the first closed-loop tracking point and the second closed-loop tracking point, to obtain the first target point ahead angle, wherein a transmitted beam that is transmitted at the first target point ahead angle coincides with the first closed-loop tracking point, and a received beam that is received at the first target point ahead angle coincides with the second closed-loop tracking point.

4. The method according to claim 2, wherein the first angle at full width at half maximum is acquired by:
determining a target beam signal from beam signals in the second signals; and
determining the first angle at full width at half maximum according to a divergence angle of the target beam signal.

5. The method according to claim 2, further comprising:
taking the first initial point ahead angle as the first target point ahead angle, in a case where the first initial point ahead angle is less than or equal to the first angle at full width at half maximum.

6. The method according to claim 1, further comprising, before the transmitting a second signal to the second satellite according to the first initial point ahead angle:
adding perturbations respectively to a plurality of incoherent beam signals to obtain the second signal, wherein light intensity distribution of each beam signal in the second signal is uniform.

7. The method according to claim 1, wherein the transmitting a fifth signal carrying first communication data to the second satellite comprises:
determining a second target point ahead angle according to a second angle at full width at half maximum of a main lobe of a light beam in the third signal and the first target point ahead angle; and
transmitting the fifth signal to the second satellite according to the second target point ahead angle.

8. The method according to claim 7, wherein the determining a second target point ahead angle according to a second angle at full width at half maximum of a main lobe of a light beam in the third signal and the first target point ahead angle comprises:
determining whether the first target point ahead angle is greater than the second angle at full width at half maximum;
acquiring a third closed-loop tracking point corresponding to the first satellite transmitting coherent beams and a fourth closed-loop tracking point corresponding to the first satellite receiving the coherent beams, in a case where the first target point ahead angle is greater than the second angle at full width at half maximum; and
adjusting the first target point ahead angle according to the third closed-loop tracking point and the fourth closed-loop tracking point, to obtain the second target point ahead angle, wherein a transmitted beam that is transmitted at the second target point ahead angle coincides with the third closed-loop tracking point, and a received beam that is received at the second target point ahead angle coincides with the fourth closed-loop tracking point.

9. The method according to claim 1, wherein the acquiring a first initial point ahead angle of the first satellite relative to the second satellite comprises:
determining the first initial point ahead angle based on a target distance between the first satellite and the second satellite.

10. The method according to any one of claims 1-9, wherein:
the second signal, the third signal, and the fifth signal are phased array signals transmitted by the first satellite through a phased array antenna; and
the first signal, the fourth signal, and the sixth signal are phased array signals received by the first satellite through the phased array antenna.

11. A communication method, applied to a second satellite, comprising:
transmitting a first signal to a first satellite, such that the first satellite acquires a first initial point ahead angle relative to the second satellite based on the first signal and transmits a second signal to the second satellite according to the first initial point ahead angle, wherein the first signal comprises a plurality of partially coherent beam signals;
receiving the second signal transmitted by the first satellite, wherein the second signal comprises a plurality of partially coherent beam signals;
transmitting a fourth signal to the first satellite in response to a third signal transmitted by the first satellite according to a first target point ahead angle, wherein the first target point ahead angle is determined by the first satellite according to a first angle at full width at half maximum of a main lobe of a light beam in the second signal and the first initial point ahead angle, and the third signal and the fourth signal comprise coherent beam signals; and
transmitting a sixth signal carrying second communication data to the first satellite in response to a fifth signal carrying first communication data transmitted by the first satellite, wherein the fifth signal is transmitted by the first satellite in response to the fourth signal, and the fifth signal and the sixth signal comprise coherent beam signals.

12. The method according to claim 11, wherein the transmitting a first signal to a first satellite comprises:
transmitting the first signal to the first satellite based on a second initial point ahead angle of the second satellite relative to the first satellite.

13. The method according to claim 12, further comprising, after the receiving a second signal transmitted by the first satellite:
determining a third target point ahead angle according to a third angle at full width at half maximum of a main lobe of a light beam in the first signal and the second initial point ahead angle, wherein
the transmitting a fourth signal to the first satellite, comprises:
transmitting the fourth signal to the first satellite according to the third target point ahead angle.

14. The method according to claim 13, wherein the determining a third target point ahead angle according to a third angle at full width at half maximum of a main lobe of a light beam in the first signal and the second initial point ahead angle comprises:
determining whether the second initial point ahead angle is greater than the third angle at full width at half maximum;
adjusting the second initial point ahead angle to obtain the third target point ahead angle, in a case where the second initial point ahead angle is greater than the third angle at full width at half maximum; or
taking the second initial point ahead angle as the third target point ahead angle, in a case where the second initial point ahead angle is less than or equal to the third angle at full width at half maximum.

15. The method according to claim 14, wherein the adjusting the second initial point ahead angle to obtain the third target point ahead angle comprises:
acquiring a fifth closed-loop tracking point corresponding to the second satellite transmitting incoherent beams and a sixth closed-loop tracking point corresponding to the second satellite receiving the incoherent beams; and
adjusting the second initial point ahead angle according to the fifth closed-loop tracking point and the sixth closed-loop tracking point to obtain the third target point ahead angle, wherein a transmitted beam that is transmitted at the third target point ahead angle coincides with a closed-loop tracking point corresponding to the second satellite transmitting incoherent beams, and a received beam that is received at the third target point ahead angle coincides with a closed-loop tracking point corresponding to the second satellite receiving the incoherent beams.

16. The method according to claim 11, wherein the transmitting a sixth signal carrying second communication data to the first satellite comprises:
determining a fourth target point ahead angle according to a fourth angle at full width at half maximum of a main lobe of a light beam in the fourth signal and the third target point ahead angle; and
transmitting the sixth signal to the first satellite according to the fourth target point ahead angle.

17. The method according to claim 16, wherein the determining a fourth target point ahead angle according to a fourth angle at full width at half maximum of a main lobe of a light beam in the fourth signal and the third target point ahead angle comprises:
determining whether the third target point ahead angle is greater than the fourth angle at full width at half maximum;
acquiring a seventh closed-loop tracking point corresponding to the second satellite transmitting coherent beams and an eighth closed-loop tracking point corresponding to the second satellite receiving the coherent beams, in a case where the third target point ahead angle is greater than the fourth angle at full width at half maximum; and
adjusting the third target point ahead angle according to the seventh closed-loop tracking point and the eighth closed-loop tracking point, to obtain the fourth target point ahead angle, wherein a transmitted beam that is transmitted at the fourth target point ahead angle coincides with the seventh closed-loop tracking point, and a received beam that is received at the fourth target point ahead angle coincides with the eighth closed-loop tracking point.

18. A communication apparatus, applied to a first satellite, comprising:
a processing module configured to, acquire a first initial point ahead angle of the first satellite relative to a second satellite, in response to a first signal transmitted by the second satellite, and transmit a second signal to the second satellite according to the first initial point ahead angle, wherein the first signal and the second signal comprise a plurality of partially coherent beam signals;
a first determining module configured to, determine a first target point ahead angle according to a first angle at full width at half maximum of a main lobe of a light beam in the second signal and the first initial point ahead angle;
a first transmitting module configured to, transmit a third signal to the second satellite according to the first target point ahead angle, such that the second satellite transmits a fourth signal based on the third signal, wherein the third signal and the fourth signal comprise coherent beam signals; and
a second transmitting module configured to, transmit a fifth signal carrying first communication data to the second satellite in response to the fourth signal transmitted by the second satellite, wherein the fifth signal is configured for the second satellite to transmit a sixth signal carrying second communication data, and the fifth signal and the sixth signal comprise coherent beam signals.

19. A communication apparatus, applied to a second satellite, comprising:
an acquiring module configured to, transmit a first signal to a first satellite, such that the first satellite acquires a first initial point ahead angle relative to the second satellite based on the first signal and transmits a second signal to the second satellite according to the first initial point ahead angle, wherein the first signal comprises a plurality of partially coherent beam signals;
a first determining module configured to, receive the second signal transmitted by the first satellite, wherein the second signal comprises a plurality of partially coherent beam signals;
a transmitting module configured to, transmit a fourth signal to the first satellite in response to a third signal transmitted by the first satellite according to a first target point ahead angle, wherein the first target point ahead angle is transmitted by the first satellite according to the first target point ahead angle, and the first target point ahead angle is determined from a first angle at full width at half maximum of a main lobe of a light beam in the second signal and the first initial point ahead angle, and the third signal and the fourth signal comprise coherent beam signals; and
a receiving module configured to, transmit a sixth signal carrying second communication data to the first satellite in response to a fifth signal carrying first communication data transmitted by the first satellite, wherein the fifth signal is transmitted by the first satellite in response to the fourth signal, and the fifth signal and the sixth signal comprise coherent beam signals.

20. An electronic device comprising a memory, a processor and a computer program stored on the memory and being executable on the processor, and the processor, when executing the computer program, implementing the communication method according to any one of claims 1-10, or the communication method according to any one of claims 11-17.

21. A computer-readable storage medium having stored thereon a computer program, which when executed by a processor, performs the communication method according to any one of claims 1-10, or the communication method according to any one of claims 11-17.
